# EUROPEAN PATENT APPLICATION

(11) **EP 1 201 399 A1**
(43) Date of publication of application: **02.05.2002**
(21) Application number: 01203958.2
(22) Date of filing: 16.10.2001
(51) Int. Cl.: B29C 47/90

(54) **Gauge device for plastic pipes**

(30) Priority: 18.10.2000 IT MI002249
(71) Applicant: COSTRUZIONI MECCANICHE LUIGI BANDERA S.p.A., I-21052 Busto Arsizio (Varese) (IT)
(72) Inventor: Gallazzi, Pasquale, 21052 Busto Arsizio, Varese (IT)
(74) Representative: Fusina, Gerolamo

(57) **Abstract**

A gauge device for plastic pipes is equipped with a gauge body (12) provided with apertures, submerged in a cooling tank (14), and an inlet flange (11) which communicates with two supply chambers of the cooling and/or lubrication fluid (17, 19), separated by an internal distributor (13), one of which is connected to holes (16) made in the inlet area and the other to spiral grooves (18) made on the inner surface of said inlet flange (11), said spirals also communicating with the above-mentioned cooling tank (14).

## Description

The present invention refers to a gauge device for plastic pipes.

To produce pipes made of plastic or similar, gauging equipment positioned downstream of the continuous pipe extruder is used. An example of said gauging equipment consists in a vacuum cooling tank with water spray or submersion for cooling the pipe. In the first type of tank mentioned, for example, water spray is provided in a vacuum thus helping to cool the surface of the pipe as it comes out of the extruder.

For the purposes of cooling and gauging, the pipe formed by the extruder is passed through a gauge body which is inserted in the above-mentioned tank and features a surface provided with apertures. These apertures permit circulation of cooling fluid on the outer surface of the pipe; the inner surface of the gauge body simultaneously performs final gauging of the pipe being formed during the above-mentioned cooling.

The gauge body is fixed to a wall of the cooling tank so that it is supported inside said tank. For this purpose, one end of the gauge body extends into a wall supporting and fixing flange. The flange is provided inside with water circulation so that the water surrounds the plastic pipe to prevent sticking of the same on the inner surface of the gauge body.

At present flanges made in this way do not have water circulation that prevents sticking of the extruded pipe at high linear pipe feed speeds. In fact, the inner surface of the flange is provided with annular recesses and/or holes, connected to a water supply chamber, which do not cover the entire inner surface of the inlet and hole of the flange. In this way the water supplied is insufficient to prevent the pipe sticking to the inside of the initial part of the gauge device, especially at high speeds.

The object of the present invention is to produce a gauge device for plastic pipes in which the above technical problems are solved.

Another object of the present invention is to produce a gauge device for plastic pipes particularly suitable for use at high linear gauging speeds.

Another object of the present invention is to produce a gauge device for plastic pipes which is particularly simple and functional, at low cost.

These objects according to the present invention are achieved by producing a gauge device for plastic pipes as illustrated in claim 1.

Further characteristics of the gauge device of the invention are described in the dependent claims.

The characteristics and advantages of a gauge device for plastic pipes according to the present invention will become clearer from the following exemplifying and non-restrictive description referring to the attached schematic drawings in which:
figure 1 is a side elevation, partially in section, of a cooling tank combined with a gauge for plastic pipes produced by an extruder, not shown;
figure 2 is a top view of the flange fixing the gauge body to the vacuum tank;
figure 3 shows an enlarged detail of the gauge body fixing flange.

With reference to the figures, a gauge unit for plastic pipes is shown, indicated overall by the reference number 10, consisting of an inlet flange 11, a gauge body 12 and, inside, a distributor 13, connected via an interposed attachment flange 15 to a cooling tank 14, which in the example is of the vacuum type.

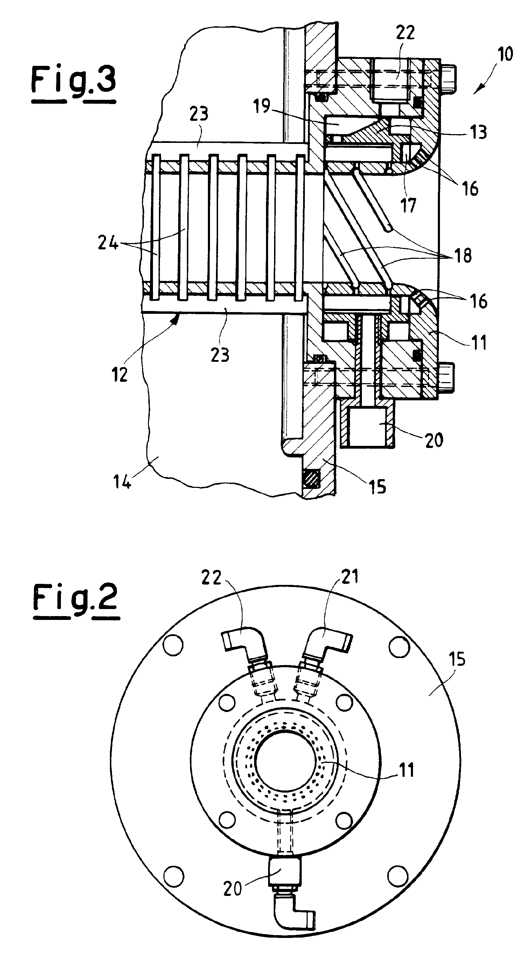

The initial part of the inlet flange 11 has a wide radius in order to fully accompany the extruded pipe inside the gauge unit 10 (figure 3). This rounded inlet surface is provided with holes 16 arranged at suitable intervals around the entire circumference to permit the flow of lubricating and/or cooling liquid, in this example water, from a first chamber 17 for supply of said liquid to the inlet of the gauge unit 10.

In the subsequent tubular part of the inlet flange 11, spiral grooves 18 are provided on the inner surface, which extend from a second water supply chamber 19 to the cooling tank 14, permitting the circulation of lubrication and/or cooling water in contact with the outer surface of the gauged pipe.

The area between the inlet flange 11 and the gauge body 12 is divided by the distributor 13, coaxial with the above-mentioned elements, into two separate chambers 17 and 19 for supply of the water. Said chambers, as shown in figure 2, are connected to three couplings for the water which are inserted in the gauge body. A coupling 20 feeds the water into the first chamber 17, and couplings 21 and 22 ensure inlet of the water into the second chamber 19 and discharge of the excess water respectively.

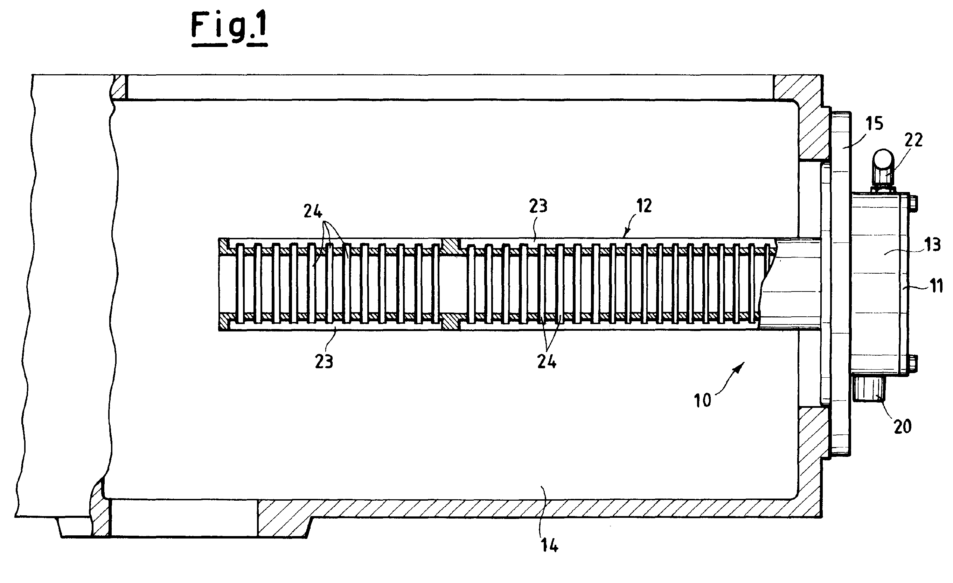

The body of the gauge device 12 consists of an area that connects with the inlet flange 11, with the connection flange 15 and with the couplings for the water 20, 21 and 22, from which a tubular portion extends, submerged in the cooling tank 14, visible overall in figure 1. Said tubular portion features, throughout its length, several diametrically opposed longitudinal grooves 23, if necessary interrupted to form a reinforcing ring.

The inner surface of the tubular part of the gauge body 12 features parallel suitably spaced annular grooves 24 extending between two successive longitudinal grooves 23.

The gauge unit 10 permits consolidation of the extruded pipe into the required dimension given by the walls of the gauge body 12, cooling said pipe with a suitable fluid in the presence of a vacuum that causes it adhere to the walls of said gauge body. To prevent the outer wall of the extruded pipe sticking to the surfaces of the gauge unit 10 with which it comes into contact, adequate lubrication must be provided.

The spiral grooves 18 of the tubular part of the inlet flange 11 are supplied by the second water supply chamber 19, in which the flow of water under pressure and discharge of the excess water is ensured by the couplings 21 and 22. The vacuum created in this example inside the tank, into which the spiral grooves 18 run, causes the water to circulate around the plastic pipe, which lubricates the inner surface of the inlet flange 11. The vacuum in the tank 14 determines suction of part of the water coming from said chamber 19 and spraying of it inside said tank. The tubular part of the gauge body therefore uses said sprayed water in cooling and lubrication of the extruded pipe in decreasing proportions moving away from the inlet area.

To ensure an adequate contribution of cooling and/or lubricating liquid at the critical moment in which the extruded pipe comes into contact with the radiused intake of the inlet flange, the water that comes out via the holes 16 made in the radiused area of the inlet flange 11 comes directly from the first water supply chamber 17. This chamber has an independent inlet, consisting of coupling 20, with constant flow rate and pressure. For this cooling and/or lubrication system, there is no device for recovery of the water which is conveyed to the recovery circuit and to the outlet by gravity.

The gauge device for plastic pipes subject of the present invention has the advantage of providing effective cooling and/or lubrication in the inlet area, exploiting the action of the vacuum in the cooling tank.

The contribution of fluid to the initial contact part via the holes 16 is not affected due to the introduction of an independent fluid conveying system not subject to the vacuum.

## Claims

1. A gauge device for plastic pipes comprising a tubular gauge body (12) submerged in a cooling tank (14) and provided with apertures, and an inlet flange (11), the inner surface of which is provided with grooves (18) and/or holes (16) for the flow of cooling and/or lubricating fluid on the outer surface of the extruded pipe connected to a supply chamber (17, 19), **characterised in that** the grooves (18) made on the inner surface of the inlet flange (11) are spiral-shaped and also communicate directly with the cooling tank (14).

2. A gauge device for plastic pipes according to claim 1, **characterised in that** the holes (16) in the intake area of the inlet flange (11) are supplied with cooling and/or lubricating fluid at constant flow rate and pressure.

3. A gauge device for plastic pipes according to claims 1 or 2, **characterised in that** an internal distributor (13) is present that forms two independent water supply chambers (17, 19).

4. A gauge device for plastic pipes according to any one of the previous claims **characterised in that** the cooling and/or lubricating fluid is water.

5. A gauge device for plastic pipes according to any one of the previous claims **characterised in that** the cooling tank (14) is in a vacuum and operates by spraying.

6. A gauge device for plastic pipes according to any one of the claims from 1 to 4 **characterised in that** the cooling tank (14) operates by water immersion.
